(19) Europäisches Patentamt
European Patent Office
Office européen des brevets

(11) **EP 3 172 830 B1**

(12) **FASCICULE DE BREVET EUROPEEN**

(45) Date de publication et mention de la délivrance du brevet:
**07.08.2024 Bulletin 2024/32**

(21) Numéro de dépôt: **15753119.5**

(22) Date de dépôt: **17.07.2015**

(51) Classification Internationale des Brevets (IPC):
***H02P 25/22*** *(2006.01)*

(52) Classification Coopérative des Brevets (CPC):
**H02P 25/22**

(86) Numéro de dépôt international:
**PCT/FR2015/051970**

(87) Numéro de publication internationale:
**WO 2016/012703 (28.01.2016 Gazette 2016/04)**

(54) **ARCHITECTURE DE MODULES ELECTRONIQUES DE PUISSANCE INTERCONNECTES POUR UNE MACHINE ELECTRIQUE TOURNANTE HEXAPHASEE ET MACHINE ELECTRIQUE TOURNANTE HEXAPHASEE COMPRENANT UNE TELLE ARCHITECTURE**

ARCHITEKTUR AUS MITEINANDER VERBUNDENEN ELEKTRONISCHEN LEISTUNGSMODULEN FÜR EINE SECHSPHASIGE ELEKTRISCHE DREHENDEMASCHINE UND SECHSPHASIGE ELEKTRISCHE DREHMASCHINE MIT SOLCH EINER ARCHITEKTUR

ARCHITECTURE OF INTERCONNECTED ELECTRONIC POWER MODULES FOR A SIX-PHASE ROTARY ELECTRIC MACHINE AND SIX-PHASE ROTARY ELECTRIC MACHINE INCLUDING SUCH AN ARCHITECTURE

(84) Etats contractants désignés:
**AL AT BE BG CH CY CZ DE DK EE ES FI GB GR HR HU IE IS IT LI LT LU LV MC MK MT NL NO PL PT RO RS SE SI SK SM TR**

(30) Priorité: **21.07.2014 FR 1456994**

(43) Date de publication de la demande:
**31.05.2017 Bulletin 2017/22**

(73) Titulaire: **Valeo Electrification**
**95800 Cergy (FR)**

(72) Inventeur: **KOBYLANSKI, Luc**
**75014 Paris (FR)**

(74) Mandataire: **Valeo Powertrain Systems**
**Service Propriété Intellectuelle**
**Immeuble le Delta**
**14, avenue des Béguines**
**95892 Cergy Pontoise (FR)**

(56) Documents cités:
**CN-A- 101 986 515     DE-A1- 102009 044 240**
**FR-A1- 2 967 845**

**Description**

**DOMAINE TECHNIQUE DE L'INVENTION.**

La présente invention concerne une architecture de modules électroniques de puissance interconnectés pour une machine électrique tournante hexaphasée de type double-triphasée, c'est-à-dire comportant un stator avec deux enroulements triphasés décalés angulairement l'un par rapport à l'autre.

L'invention concerne également une machine électrique tournante hexaphasée de type double-triphasée comprenant cette architecture, notamment pour des applications dans des véhicules automobiles.

**ARRIERE PLAN TECHNOLOGIQUE DE L'INVENTION.**

Il est connu que les machines électriques tournantes polyphasées présentent des avantages sur les machines triphasées en termes de réduction des oscillations du couple en mode moteur, ou de facilité d'élimination des harmoniques en mode générateur.

Le rendement des machines polyphasées est de plus augmenté. Par exemple, les pertes statoriques d'une machine hexaphasée peuvent être de près de 7% inférieures à celles d'une machine triphasée équivalente.

Cependant, l'augmentation du nombre de phases entraîne une augmentation du nombre de capteurs de courant nécessaires pour piloter la machine, car un capteur est a priori nécessaire pour mesurer chaque variable de courant indépendante. La somme de toutes les intensités étant nulle, le nombre de capteurs nécessaire est égal au nombre de phases diminué de un, c'est-à-dire cinq capteurs dans le cas d'une machine hexaphasée.

Une structure double-triphasée permet de réduire le nombre de capteurs et autorise diverses optimisations d'ordre mécatronique portant sur l'architecture des modules électroniques de puissance reliés au stator de la machine.

Notamment, dans l'architecture divulguée dans la demande brevet FR2967845 de la société VALEO EQUIPEMENTS ELECTRIQUES MOTEUR, ou dans le brevet DE 10 2009 044 240 A1 chaque module électronique de puissance comprend des semi-conducteurs de puissance correspondant à deux branches d'un pont hexaphasé, c'est-à-dire à deux phases, ce qui permet une diminution de l'encombrement et facilite l'intégration des modules sur un palier arrière de la machine.

En vue d'applications dans le domaine très concurrentiel de l'automobile, le but de la présente invention est d'obtenir une machine électrique tournante ayant les meilleures performances possibles avec des composants électroniques ayant un coût fixe, donc des caractéristiques prédéterminées pour ce coût.

L'entité inventive a constaté, lorsque la machine est à l'arrêt, ou en rotation à très faible vitesse, des pointes d'échauffement des modules électroniques de puissance susceptibles d'entraîner un phénomène d'avalanche et de détruire les semi-conducteurs.

**DESCRIPTION GENERALE DE L'INVENTION.**

La présente invention, divulguée dans la revendication indépendante 1 jointe, vise donc à pallier cet inconvénient sans réduire les performances en limitant les courants de phases ou sans choisir des composants avec des caractéristiques améliorées, qui auraient une incidence sur les coûts.

Elle a précisément pour objet une architecture de modules électroniques de puissance interconnectés pour une machine électrique tournante hexaphasée du type de celles comportant trois premiers et trois seconds enroulements de phase formant un premier et un second systèmes triphasés décalés angulairement d'un angle de décalage prédéterminé tel que défini dans la revendication 1.

Dans ce type de machines, les premiers et seconds enroulements de phase sont parcourus respectivement par des premiers et des seconds courants de phase que les modules électroniques de puissance sont aptes à contrôler.

Ces modules électroniques de puissance sont du type de ceux comportant chacun des composants électroniques disposés dans un boîtier et des éléments de connexion extérieurs comprenant des première et seconde bornes de puissance aptes à être reliées électriquement chacune à des premier et second exemplaires des premiers et seconds enroulements de phase.

Selon l'invention, afin de pallier l'inconvénient précité, ces modules électroniques de puissance sont interconnectés de manière à équilibrer des pertes des modules électroniques de puissance.

Plus particulièrement, les modules électroniques de puissance sont interconnectés de manière à ce qu'un ensemble de chaque décalage de phase entre les premier et second exemplaires des premiers et seconds enroulements de phase minimise une variation d'une puissance électrique instantanée totale en fonction d'un angle électrique dans chacun des modules électroniques de puissance.

Cette minimisation conduit à une puissance électrique instantanée totale dans chacun des modules électroniques de puissance sensiblement constante en fonction de cet angle électrique.

Dans une forme de réalisation particulière de l'architecture de modules électroniques de puissance interconnectés pour une machine électrique tournante hexaphasée selon l'invention, l'angle de décalage vaut 30°.

L'invention concerne également une machine électrique tournante hexaphasée de type double-triphasée qui comprend une architecture de modules électroniques de puissance interconnectés telle que décrite ci-dessus.

EP 3 172 830 B1

Ces quelques spécifications essentielles auront rendu évidents pour l'homme de métier les avantages apportés par l'architecture de modules électroniques de puissance interconnectés pour une machine électrique tournante hexaphasée de type double-triphasée selon l'invention, ainsi que par la machine électrique tournante de type double-triphasée correspondante, par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

**BREVE DESCRIPTION DES DESSINS.**

La **Figure 1** représente schématiquement une machine électrique tournante double-triphasée et un pont hexaphasé de contrôle des courants de phase.
La **Figure 2** représente une puissance électrique instantanée totale dans deux enroulements de phase pour plusieurs décalages de phase entre ces enroulements.
Les **Figures 3a et 3b** montrent schématiquement respectivement une architecture de modules électroniques de puissance interconnectés non optimisée et une architecture optimisée selon l'invention.
La **Figure 4** est une vue d'un palier arrière d'une machine électrique tournante hexaphasée de type double-triphasée comprenant l'architecture de modules électroniques de puissance interconnectés montrée sur la **Figure 3b.**

**DESCRIPTION DU MODE DE REALISATION PREFERE DE L'INVENTION.**

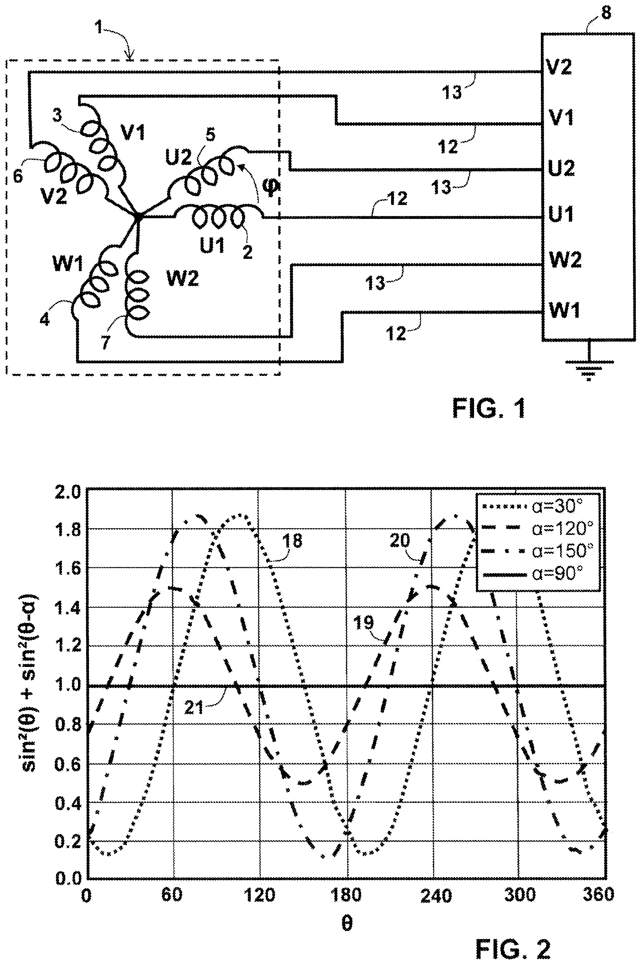

Comme le montre bien la représentation schématique de la **Figure 1**, dans le mode de réalisation préféré de l'invention, le stator 1 de la machine électrique tournante double-triphaséee comprend un premier système triphasé en étoile constitué de trois premiers enroulements de phase 2, 3, 4 et un second système triphasé en étoile constitué de trois second enroulements de phase 5, 6, 7 décalé l'un par rapport à l'autre d'un angle de décalage φ de 30°.

Les premiers 2, 3, 4 et seconds 5, 6, 7 enroulements de phase ont chacun une extrémité reliée à un pont hexaphasé 8 et une autre extrémité commune.

Des premiers courants de phase U1, V1, W1 circulant dans les premiers enroulements de phase 2, 3, 4 et des seconds courants de phase U2, V2, W2 circulant dans les seconds enroulements de phase 5, 6, 7 sont contrôlés par le pont hexaphasé 8 de manière connue en soi (les premiers et seconds courants de phase sont notés respectivement U1, V1, W1 et U2, V2, W2 successivement dans le sens anti-horaire; par convention U1 et U2 présentent un déphasage égal à l'angle de décalage φ).

Le pont hexaphasé 8 est réalisé pratiquement sous la forme de trois modules électroniques de puissance 15, 16, 17 qui intègrent chacun deux branches du pont 8 correspondant à deux phases différentes U1, U2; V1, V2; W1, W2, et qui sont disposés sur un palier arrière de la machine électrique tournante.

Un module 15, 16, 17 peut contrôler deux courants d'un même système triphasé (déphasés de 120°) ou deux courants de deux systèmes différents (déphasés de 30, 90 ou 150°).

En effet, les première et seconde bornes de puissance 12, 13 de chaque module 15, 16, 17 peuvent être reliées aux premiers et seconds enroulements de phase selon plusieurs configurations différentes.

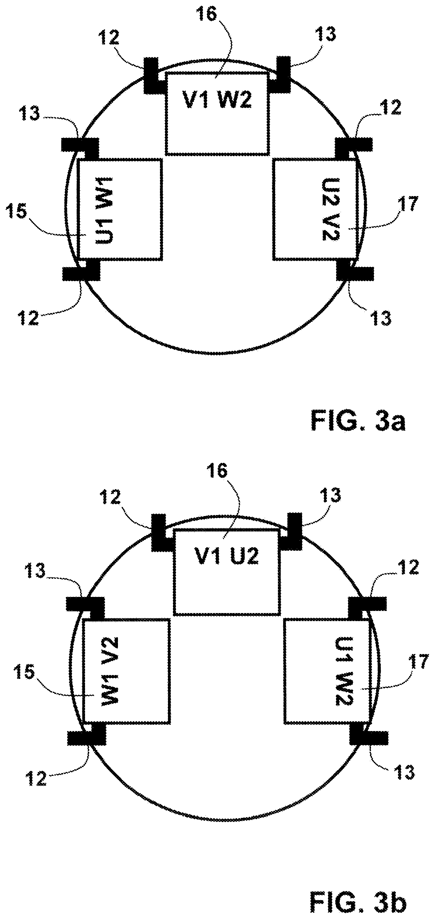

La **Figure 3a** montre schématiquement une première configuration dans laquelle:

- les première et seconde bornes de puissance 12, 13 d'un premier module électronique de puissance 15 sont reliées respectivement à un premier exemplaire U1 des premiers enroulements de phase 2, 3, 4 et à un second exemplaire W1 de ces premiers enroulements de phase 2, 3, 4;
- les première et seconde bornes de puissance 12, 13 d'un deuxième module électronique de puissance 16 sont reliées respectivement à un autre premier exemplaire V1 des premiers enroulements de phase 2, 3, 4 et à un autre second exemplaire W2 des seconds enroulements de phase 5, 6, 7;
- les première et seconde bornes de puissance 12, 13 d'un troisième module électronique de puissance 17 sont reliées respectivement à encore un autre premier exemplaire U2 des seconds enroulements de phase 5, 6, 7 et à encore un autre second exemplaire V2 de ces seconds enroulements de phase 5, 6, 7.

Dans cette première configuration, l'ensemble de chaque décalage de phase α entre les premier et second exemplaires des premiers et seconds enroulements 2, 3, 4, 5, 6, 7 de phase est le suivant:

- $\alpha1 = 120°$ pour le premier module électronique de puissance 15 intégrant les composants contrôlant les premiers courants de phase U1 et W1 ;
- $\alpha2 = 150°$ pour le deuxième module électronique de puissance 16 intégrant les composants contrôlant les premier et second courants de phase V1 et W2;
- $\alpha3 = 120°$ pour le troisième module électronique de puissance 17 intégrant les composants contrôlant les seconds courants de phase U2 et V2.

Dans chaque module électronique de puissance 15, 16, 17, une puissance électrique instantanée totale est proportionnelle à l'expression:

3

$$P(\theta) = \sin^2 \theta + \sin^2 (\theta - \alpha) \text{ avec } \theta = \omega t$$

$\omega$ étant la pulsation des courants de phase et t la variable de temps.

La **Figure 2** représente cette expression pour différentes valeurs du décalage de phase $\alpha$ :

- $\alpha = 30°$ (trait pointillé) 18;
- $\alpha = 120°$ (trait tireté) 19;
- $\alpha = 150°$ (trait mixte) 20.

Pour les premiers courants de phase U1 et W1 décalés de 120°, la puissance électrique instantanée totale varie de +/- 50% autour de sa valeur moyenne.

Pour les premier et second courants de phase V1 et W2 décalés de 150°, la puissance électrique instantanée totale varie de +/- 86% autour de sa moyenne.

Lorsque la machine est en rotation à vitesse élevée, ces courants de phase varient rapidement et une inertie thermique des modules électroniques de puissance 15, 16, 17 filtre des pointes de puissance dissipée: une température correspond alors à une puissance dissipée moyenne.

En revanche, lorsque la machine est à l'arrêt, ou en rotation à très faible vitesse, l'inertie thermique des modules électroniques de puissance 15, 16, 17 est insuffisante pour éviter leur échauffement sur les pointes de puissance.

La **Figure 2** montre que pour un décalage de phase $\alpha$ égal à 90° (trait plein 21), la puissance électrique instantanée totale est constante.

Dans le mode de réalisation préféré de l'invention, où le décalage angulaire $\varphi$ entre les premier et second systèmes triphasés vaut 30°, les première et seconde bornes de puissance 12, 13 de chaque module 15, 16, 17 peuvent être reliées aux premier et second exemplaires des premiers et seconds enroulements de phase de manière à réaliser ce décalage de phase $\alpha$ égal à 90°, comme le montre bien la **Figure 3b**.

Pour réaliser cette seconde configuration optimale:

- les première et seconde bornes de puissance 12, 13 d'un premier module électronique de puissance 15 sont reliées respectivement à un premier exemplaire W1 des premiers enroulements de phase 2, 3, 4 et à un second exemplaire V2 de ces seconds enroulements de phase 5, 6, 7;
- les première et seconde bornes de puissance 12, 13 d'un deuxième module électronique de puissance 16 sont reliées respectivement à un autre premier exemplaire V1 des premiers enroulements de phase 2, 3, 4 et à un autre second exemplaire U2 des seconds enroulements de phase 5, 6, 7;
- les première et seconde bornes de puissance 12, 13 d'un troisième module électronique de puissance 17 sont reliées respectivement à encore un autre premier exemplaire U1 des premiers enroulements de phase 2, 3, 4 et à encore un autre second exemplaire W2 de ces seconds enroulements de phase 5, 6, 7.

Dans cette seconde configuration, les pertes, notamment les pertes thermiques, dans chaque module électronique de puissance 15, 16, 17 sont indépendantes de l'angle électrique.

D'autres associations deux à deux des phases U1, U2; V1, V2; W1, W2. dans les modules électroniques de puissance 15, 16, 17 conduiraient à l'existence de pire cas plus sévères.

Par conséquent, cette seconde configuration montrée sur la **Figure 3b** permet de maximiser un couple moteur disponible en fonctionnement prolongé en rotor bloqué (notamment: fonction de pré-positionnement du vilebrequin, fonction de maintien d'une position...).

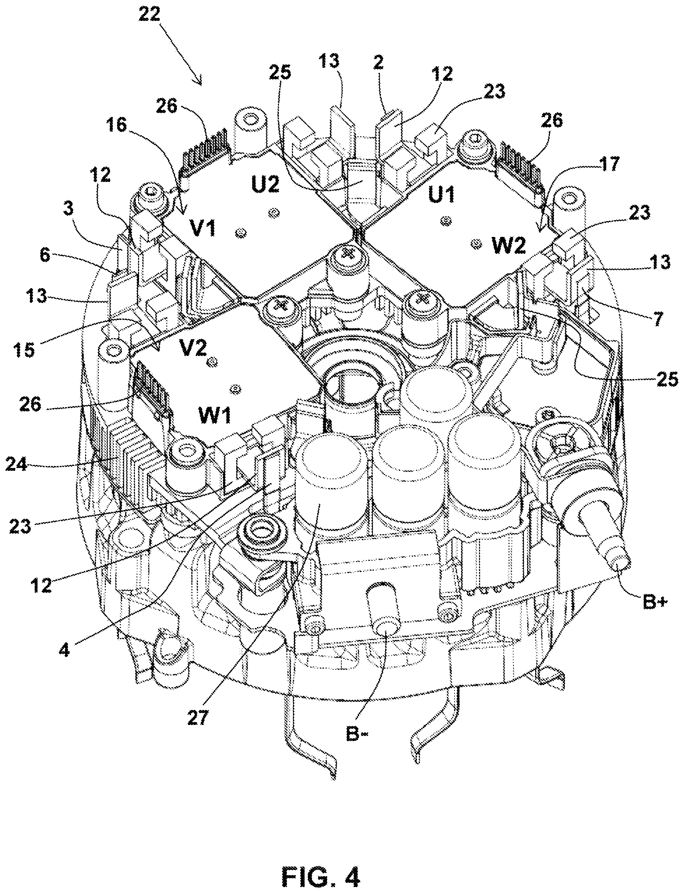

Un exemple concret de machine électrique tournante hexaphasée 22 de type double-triphasée comprenant une architecture de modules électroniques de puissance 15, 16, 17 selon l'invention est montré sur la **Figure 4.**

L'homme de métier reconnaîtra facilement sur le palier arrière présenté les trois modules électroniques de puissance 15, 16, 17.

Ces modules électroniques de puissance 15, 16, 17 se présentent comme des boîtiers d'une forme générale de parallélépipède rectangle.

Chaque boîtier 15, 16, 17 comporte des éléments de connexion extérieurs comprenant des première et seconde bornes de puissance 12, 13 qui s'étendent perpendiculairement à deux faces opposées.

En sortie des modules électroniques de puissance 15, 16, 17, ces première et seconde bornes de puissance 12, 13 comportent chacune un circuit magnétique 23 et un capteur à effet Hall de mesure du courant de phase U1, U2; V1, V2; W1, W2.

Le palier arrière présenté sur la **Figure 4** est celui d'une machine électrique tournante double-triphasée du mode de réalisation préféré de l'invention, c'est-à-dire que les premier et second systèmes triphasés sont décalés angulairement de 30°.

Les première et seconde bornes de puissance 12, 13 sont donc reliées aux pattes de connexion des premiers et seconds enroulements de phase 2, 3, 4, 5, 6, 7 de manière à réaliser le schéma d'interconnexion montré sur la **Figure 3b**.

De la sorte, la puissance électrique instantanée des couples W1-V2, V1-U2 et U1-W2 des premier et second courants de phase est constante, et les pertes sont réparties uniformément entre les trois modules électroniques de puissance 15, 16, 17.

La taille des dissipateurs thermiques 24 des modules électroniques de puissance 15, 16, 17 peut donc être plus réduite que dans une architecture non optimisée comme dans la première configuration montrée sur la **Figure 3a**.

L'homme de métier aura également reconnu sur le palier arrière 22 de la machine électrique tournante selon l'invention présenté sur la **Figure 4** d'autres éléments de connexion extérieurs des modules électroniques de puissance 15, 16, 17 comme des traces de puissance 25 reliées à un pôle positif B+ de la machine 22 et des connecteurs de signaux 26.

Il aura noté la présence de capacités de filtrage 27 ainsi que d'autres composants qui ne seront pas décrits en détail, car ils ne contribuent pas directement à la réalisation du but de l'invention.

Comme il va de soi, l'invention ne se limite pas au seul mode de réalisation préférentiel décrit ci-dessus.

Une description similaire pourrait être effectuée pour des machine électriques tournantes de type double-triphasée présentant des angles de décalage φ différents de 30°, notamment 15°, 45° ou 60°.

Une même analyse conduirait à une architecture de modules électroniques de puissance 15, 16, 17 interconnectés dans lesquels les pertes thermiques seraient équilibrées, sinon totalement, mais autant que possible, en choisissant des associations deux par deux des phases permettant de limiter la variation de la puissance électrique instantanée totale dans chacun des modules électroniques de puissance 15, 16, 17 autour de sa valeur moyenne.

Par exemple, dans le cas d'un angle de décalage φ valant 45°, la variation de la puissance électrique instantanée totale autour de sa valeur moyenne est limitée à +/- 26% si l'on opte pour une association des couples U2-V1, V2-W1 et W2-U1 des premier et second courants de phase pour lesquels le décalage de phase α est 75°.

L'invention embrasse donc toutes les variantes possibles de réalisation dans la mesure où ces variantes restent dans le cadre défini par les revendications ci-après.

## Revendications

1. Machine électrique tournante hexaphasée (22) du type double-triphasée, comportant un rotor et un stator avec deux enroulements triphasés décalés angulairement l'un par rapport à l'autre et comportant trois modules électroniques de puissance (15, 16, 17), les trois premiers (2, 3, 4) et les trois seconds (5, 6, 7) enroulements de phase formant le premier et le second systèmes triphasés décalés angulairement d'un angle de décalage (φ) prédéterminé, lesdits premiers (2, 3, 4) et seconds (5, 6, 7) enroulements de phase étant parcourus respectivement par des premiers (U1, V1, W1) et des seconds (U2, V2, W2) courants de phase, chaque module électronique de puissance (15, 16, 17) étant apte à contrôler un premier (U1, V1, W1) et un second (U2, V2, W2) courants de phase et chaque module comportant chacun des composants électroniques disposés dans un boîtier et des éléments de connexion extérieurs (12, 13, 25, 26) comprenant des première et seconde bornes de puissance (12, 13) aptes à être reliées électriquement à des premier et second exemplaires desdits premiers et seconds enroulements de phase (2, 3, 4; 5, 6, 7), la première borne et la seconde borne de puissance (12,13) de chaque module électronique de puissance (15, 16, 17) étant respectivement reliée à un enroulement du premier système triphasé et à un enroulement du second système triphasé, de manière à réaliser entre ces enroulements un décalage de phase α, (15, 16, 17), **caractérisé en ce que** l'ensemble des décalages de phase desdits modules électroniques de puissance (15, 16, 17) minimise une variation d'une puissance électrique instantanée totale, soit la somme des puissances dissipées dans chacun des modules électroniques de puissance (15, 16, 17), autour d'une valeur moyenne en fonction d'un angle électrique $\Theta$, avec $\theta = \omega t$, $\omega$ étant la pulsation des courants de phase et t la variable de temps, ladite puissance électrique instantanée totale étant proportionnelle à la fonction $\sin^2\theta + \sin^2(\theta-\alpha)$, avec $\theta$ et $\alpha$ étant respectivement l'angle électrique et le décalage de phase, ledit décalage de phase $\alpha$ valant 90°.

2. Machine selon la revendication 1, **caractérisée en ce que** ladite puissance électrique instantanée totale dans chacun desdits modules électroniques de puissance (15, 16, 17) est constante en fonction dudit angle électrique ($\theta$), ledit angle de décalage ($\varphi$) valant 30°.

## Patentansprüche

1. Sechsphasige drehende elektrische Maschine (22) vom doppelt dreiphasigen Typ, umfassend einen Rotor und einen Stator mit zwei Dreiphasenwicklungen, die winklig zueinander versetzt sind, und umfassend drei elektronische Leistungsmodule (15, 16, 17), wobei die ersten drei (2, 3, 4) und die zweiten drei (5, 6, 7) Phasenwicklungen das erste und das zweite Dreiphasensystem bilden, die um einen vorbestimmten Versatzwinkel (φ) winklig versetzt sind, wobei die ersten (2, 3, 4) und die zweiten (5, 6, 7) Phasenwicklungen jeweils von ersten (U1, V1, W1) und zweiten (U2, V2, W2) Phasenströmen durchflossen werden, wobei jedes elektronische Leistungsmodul (15, 16, 17) dazu fähig ist, einen ersten (U1, V1, W1) und einen zweiten (U2, V2, W2) Phasenstrom zu steuern, und jedes Modul jeweils in einem Gehäuse angeordnete elektronische Komponenten und externe Verbindungselemente (12, 13, 25, 26), die eine erste und eine zweite Leistungsklemme (12, 13) beinhalten, die dazu fähig sind, mit einem ersten und einem zweiten Exemplar der ersten und der zweiten Phasenwicklungen (2, 3, 4; 5, 6, 7) elektrisch verbunden zu werden, umfasst, wobei die erste Klemme und die zweite Leistungsklemme (12, 13) jedes elektronischen Leistungsmoduls (15, 16, 17) jeweils mit einer Wicklung des ersten Dreiphasensystems und einer Wicklung des zweiten Dreiphasensystems verbunden sind, um zwischen diesen Wicklungen einen Phasenversatz $\alpha$, (15, 16, 17), herzustellen, **dadurch gekennzeichnet, dass** die Gesamtheit der Phasenversätze der elektronischen Leistungsmodule (15, 16, 17) eine Variation einer momentanen elektrischen Gesamtleistung, entsprechend der Summe der Verlustleistungen in jedem der elektronischen Leistungsmodule (15, 16, 17), um einen Mittelwert in Abhängigkeit von einem elektrischen Winkel $\Theta$ minimiert, mit $\theta = wt$, wobei w die Pulsation der Phasenströme ist und t die Zeitvariable ist, wobei die momentane elektrische Gesamtleistung zu der Funktion $\sin^2\theta+\sin^2(\theta-\alpha)$ proportional ist, wobei $\theta$ und $\alpha$ der elektrische Winkel bzw. der Phasenversatz sind, wobei der Phasenversatz $\alpha$ 90° beträgt.

2. Maschine nach Anspruch 1, **dadurch gekennzeichnet, dass** die momentane elektrische Gesamtleistung in jedem der elektronischen Leistungsmodule (15, 16, 17) in Abhängigkeit von dem elektrischen Winkel ($\theta$) konstant ist, wobei der Versatzwinkel ($\varphi$) 30° beträgt.

## Claims

1. A six-phase rotating electric machine (22) of the double three-phase type comprising a rotor and a stator with two three-phase windings angularly offset from each other and comprising three electronic power modules (15, 16, 17), the first three (2, 3, 4) and the second three (5, 6, 7) phase windings form the first and the second three-phase system which are angularly offset by a predetermined offset angle ($\varphi$), wherein the first (2, 3, 4) and the second (5, 6, 7) phase windings are respectively connected from first (U1, V1, W1) and second (U2, V2, W2) phase currents flowing through the first (2, 3, 4) and second (5, 6, 7) phase windings, each electronic power module (15, 16, 17) being capable of controlling a first (U1, V1, W1) and a second (U2, V2, W2) phase current, and each module comprises electronic components and external connection elements (12, 13, 25, 26), each arranged in a housing, including a first and a second power terminal (12, 13) capable of being electrically connected to a first and a second one of the first and the second phase windings (2, 3, 4, 5, 6, 7); 5, 6, 7), the first terminal and the second power terminal (12, 13) of each electronic power module (15, 16, 17) being connected respectively to a winding of the first three-phase system and to a winding of the second three-phase system in order to establish a phase offset a, (15, 16, 17) between these windings, **characterised in that** the totality of the phase offsets of the electronic power modules (15, 16, 17) is a variation of an instantaneous phase offset $\alpha$, (15, 16, 17), 17) minimises a variation of a total instantaneous electrical power, corresponding to the sum of the power losses in each of the electronic power modules (15, 16, 17), by an average value as a function of an electrical angle $\Theta$, where $\theta = \omega t$, where $\omega$ is the pulsation of the phase currents and t is the time variable, the total instantaneous electrical power being proportional to the function $\sin^2\theta+\sin^2(\theta-\alpha)$, where $\theta$ and $\alpha$ are the electrical angle and the phase offset, respectively, where the phase offset is the angle between the phase currents and the time variable, the phase offset, where the phase offset $\alpha$ is 90°.

2. The machine according to claim 1, **characterised in that** the instantaneous total electrical power in each of the electronic power modules (15, 16, 17) is constant as a function of the electrical angle ($\theta$), the offset angle ($\varphi$) being 30°.

**FIG. 1**

**FIG. 2**

FIG. 3a

FIG. 3b

**FIG. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2967845

- DE 102009044240 A1